# EUROPEAN PATENT APPLICATION

(11) **EP 4 697 182 A1**
(43) Date of publication of application: **18.02.2026**
(21) Application number: 24835054.8
(22) Date of filing: 21.02.2024
(51) Int. Cl.: G06F 12/02

(54) **ACCESS METHOD AND ACCESS APPARATUS**

(30) Priority: 05.07.2023 CN 202310831471
(71) Applicant: Huawei Technologies Co., Ltd., Shenzhen, Guangdong 518129 (CN)
(72) Inventor: TANG, Guijin, Shenzhen, Guangdong 518129 (CN)
(74) Representative: Pfenning, Meinig & Partner mbB
(86) International application number: PCT/CN2024/077964
(87) International publication number: WO 2025/007567

(57) **Abstract**

Embodiments of this application provide an access method and an access apparatus, and relate to the field of computer technologies, to resolve problems of poor extensibility and low performance during mutual data access between server nodes. A specific solution is: determining, based on a first virtual address, an address of a second server node corresponding to the first virtual address, where the first virtual address is an address carried in an access request obtained by a first server node (S501); and if the address of the second server node is a second virtual address, sending the access request to the second virtual address, where the second virtual address is a shared virtual address of the first server node and the second server node (S502). Embodiments of this application are applied to the process of mutual data access between the server nodes.

## Description

This application claims priority to Chinese Patent Application No. 202310831471.6, filed with the China National Intellectual Property Administration on July 5, 2023 and entitled "ACCESS METHOD AND ACCESS APPARATUS", which is incorporated herein by reference in its entirety.

### TECHNICAL FIELD

Embodiments of this application relate to the field of computer technologies, and in particular, to an access method and an access apparatus.

### BACKGROUND

A distributed system or a computer cluster typically includes multiple server nodes interconnected through a high-speed link. To make full use of computing capabilities of the multiple server nodes in the distributed system or the computer cluster, one computing task may be typically divided into multiple computing subtasks to be delivered to different server nodes for computing, and then computing results of all the computing subtasks are summarized.

Computing tasks are typically run in a form of processes. Address spaces of processes deployed on different server nodes are isolated, and operating systems (operating systems, OSs) on the different server nodes are also isolated from each other. Therefore, how to efficiently, simply, securely, and reliably summarize inter-process computing results is challengeable.

### SUMMARY

Embodiments of this application provide an access method and an access apparatus. A shared virtual address space is allocated for a first server node and a second server node, so that the first server node and the second server node can securely and reliably access each other based on a shared virtual address. This resolves problems of poor extensibility and low performance of an existing implementation.

To achieve the foregoing objectives, the following technical solutions are used in embodiments of this application.

According to a first aspect, an embodiment of this application provides an access method. The method includes: determining, based on a first virtual address, an address of a second server node corresponding to the first virtual address, where the first virtual address is an address carried in an access request obtained by a first server node; and if the address of the second server node is a second virtual address, sending the access request to the second virtual address, where the second virtual address is a shared virtual address of the first server node and the second server node.

Therefore, if the address of the second server node is the shared virtual address, for example, the second virtual address, it indicates that the address of the second server node can be shared by another server node, for example, the first server node for access. Compared with the conventional technology in which complex packet receiving and sending are required or sending is performed through a protocol stack, this application is more efficient and has better performance. In addition, in this embodiment of this application, the shared virtual address is used, and this embodiment does not depend on a topology structure of a server node. Therefore, this embodiment is more flexible to extend than the conventional technology.

In addition, a correspondence between the first virtual address and the address of the second server node may be stored in a physical memory of the first server node. Therefore, accessing the physical memory of the first server node is more efficient than accessing a remote physical memory.

In a possible design, the determining, based on the first virtual address, the address of the second server node corresponding to the first virtual address includes: determining, based on the first virtual address, a virtual physical address corresponding to the first virtual address, where the virtual physical address is an address of a virtual space of the first server node; and determining, based on the virtual physical address, the address of the second server node corresponding to the virtual physical address. Based on this, the first server node may be divided into a virtual space corresponding to the virtual physical address, where the virtual space may be far greater than a space of a local physical address. This can expand a physical memory space that can be accessed by the first server node.

In a possible design, a correspondence between the first virtual address and the virtual physical address is stored in a server node page table, and a correspondence between the virtual physical address and the address of the second server node is stored in a bus page table.

In this design, the server node page table and the bus page table may be stored in the local physical memory of the first server node. When performing address translation, the first server node reads the page table in the local physical memory, thereby improving efficiency and performance.

In a possible design, a page table entry length of the server node page table is different from a page table entry length of the bus page table. In this way, different page table entry lengths are set, so that a quantity of page table entries can be reduced. This reduces physical memory overheads of the first server node, and also improves table search efficiency.

In a possible design, the access request further includes an access credential and an identification of the second server node, and the access credential is used to configure an access permission of the access request, that is, is used to limit an access range of the first server node. Therefore, for the second server node, access may be more secure, and privacy data leakage is avoided.

In a possible design, the method further includes: if the address of the second server node is a physical address, accessing a physical memory of the first server node based on the physical address, where the first server node and the second server node are the same server node.

In this design, if the first server node accesses the local physical memory, the first server node may determine the physical address based on the first virtual address and the correspondence between the first virtual address and the physical address.

According to a second aspect, an embodiment of this application further provides an access method. The method includes: receiving an access request including a second virtual address, and the second virtual address is a shared virtual address of a first server node and a second server node; determining, based on the second virtual address, a physical address corresponding to the second virtual address; and accessing a physical memory of the second server node based on the access request and the physical address.

Therefore, different server nodes access each other based on the shared virtual address. After receiving the access request, the second server node determines the physical address based on the shared virtual address, to access the physical memory corresponding to the physical address. Therefore, in the access method provided in this embodiment of this application, mutual access is performed based on the shared virtual address. The access method is more efficient than the conventional technology in which complex packet receiving and sending are required and sending is performed through a protocol stack. In addition, in this embodiment of this application, the shared virtual address is used, and this embodiment does not depend on a topology structure of a server node. Therefore, this embodiment is more flexible than the conventional technology.

In addition, a correspondence between the second virtual address and the physical address may be stored in the physical memory of the second server node. Therefore, accessing the physical memory of the second server node is more efficient than accessing a remote physical memory.

In a possible design, the access request further includes an access credential, and the access credential is used to configure an access permission of the access request. Before the determining, based on the second virtual address, the physical address corresponding to the second virtual address, the method further includes: determining, based on the access credential, whether the access permission of the access request is valid. That is, the access credential may limit an access range of the first server node. Therefore, for the second server node, access may be more secure, and privacy data leakage is avoided.

According to a third aspect, an embodiment of this application further provides an access apparatus. The access apparatus includes a system memory management unit and a sending unit. The system memory management unit is configured to determine, based on a first virtual address, an address of a second server node corresponding to the first virtual address, where the first virtual address is an address carried in an access request obtained by a first server node. The sending unit is configured to: if the address of the second server node is a second virtual address, send the access request to the second virtual address, where the second virtual address is a shared virtual address of the first server node and the second server node.

For beneficial effects of the third aspect, refer to the descriptions of the first aspect.

In a possible design, the system memory management unit includes a memory management unit and a bus memory management unit. The memory management unit is configured to determine, based on the first virtual address, a virtual physical address corresponding to the first virtual address, where the virtual physical address is an address of a virtual space of the first server node. The bus memory management unit is configured to determine, based on the virtual physical address, the address of the second server node corresponding to the virtual physical address.

In a possible design, a correspondence between the first virtual address and the virtual physical address is stored in a server node page table, and a correspondence between the virtual physical address and the address of the second server node is stored in a bus page table.

In a possible design, a page table entry length of the server node page table is different from a page table entry length of the bus page table.

In a possible design, the access request further includes an access credential and an identification of the second server node, and the access credential is used to configure an access permission of the access request.

In a possible design, the access apparatus further includes an access unit. The access unit is configured to: if the address of the second server node is a physical address, access a physical memory of the first server node based on the physical address, where the first server node and the second server node are the same server node.

According to a fourth aspect, an embodiment of this application provides an access apparatus. The access apparatus includes a receiving unit and a bus memory management unit. The receiving unit is configured to receive an access request including a second virtual address, where the second virtual address is a shared virtual address of a first server node and a second server node. The bus memory management unit is configured to determine, based on the second virtual address, a physical address corresponding to the second virtual address. The bus memory management unit is further configured to access a physical memory of the second server node based on the access request and the physical address.

For beneficial effects of the fourth aspect, refer to the descriptions of the second aspect.

In a possible design, the access request further includes an access credential, and the access credential is used to configure an access permission of the access request. The bus memory management unit is further configured to determine, based on the access credential, whether the access permission of the access request is valid.

According to a fifth aspect, an embodiment of this application provides a chip system. The chip system includes a processor core, a system memory management unit, and a physical memory, the processor core is coupled to the system memory management unit, and the system memory management unit is coupled to the physical memory.

According to a sixth aspect, an embodiment of this application provides a computer-readable storage medium, including computer instructions. When the computer instructions are run on an electronic device, the electronic device is enabled to perform the access method according to any one of the foregoing aspects and the possible implementations.

According to a seventh aspect, an embodiment of this application provides a computer program product. When the computer program product runs on a computer or a processor, the computer or the processor is enabled to perform the access method according to any one of the foregoing aspects and the possible implementations.

It may be understood that the access apparatus, the chip system, the computer-readable storage medium, the computer program product, or the like provided above may be applied to the corresponding method provided above. Therefore, for beneficial effect that can be achieved by the access apparatus, the chip system, the computer-readable storage medium, or the computer program product, refer to beneficial effect in the corresponding method. Details are not described herein again.

These aspects or other aspects in this application are more concise and comprehensible in the following descriptions.

### BRIEF DESCRIPTION OF DRAWINGS

FIG. 1 is a diagram of a structure of a distributed system according to an embodiment of this application;
FIG. 2 is a diagram of a structure of a server node according to an embodiment of this application;
FIG. 3 is a diagram of a structure of another server node according to an embodiment of this application;
FIG. 4 is diagram of a structure of another server node according to an embodiment of this application;
FIG. 5 is a flowchart of an access method according to an embodiment of this application;
FIG. 6 is a diagram of an address mapping relationship according to an embodiment of this application;
FIG. 7 is a flowchart of initiating an access request for a shared virtual address by a first server node according to an embodiment of this application;
FIG. 8 is another flowchart of initiating an access request for a shared virtual address by a first server node according to an embodiment of this application;
FIG. 9 is another flowchart of initiating an access request for a shared virtual address by a first server node according to an embodiment of this application;
FIG. 10 is another flowchart of initiating an access request for a shared virtual address by a first server node according to an embodiment of this application;
FIG. 11 is a block diagram of a structure of a server node according to an embodiment of this application;
FIG. 12 is a flowchart of a page table configuration of a server node according to an embodiment of this application;
FIG. 13 is a flowchart of another page table configuration of a server node according to an embodiment of this application;
FIG. 14 is a diagram of an application scenario of an access method according to an embodiment of this application;
FIG. 15 is a diagram of a composition of an access apparatus according to an embodiment of this application; and
FIG. 16 is a diagram of a composition of another access apparatus according to an embodiment of this application.

### DESCRIPTION OF EMBODIMENTS

For ease of understanding, related concepts are first described in embodiments of this application for reference, as shown below.

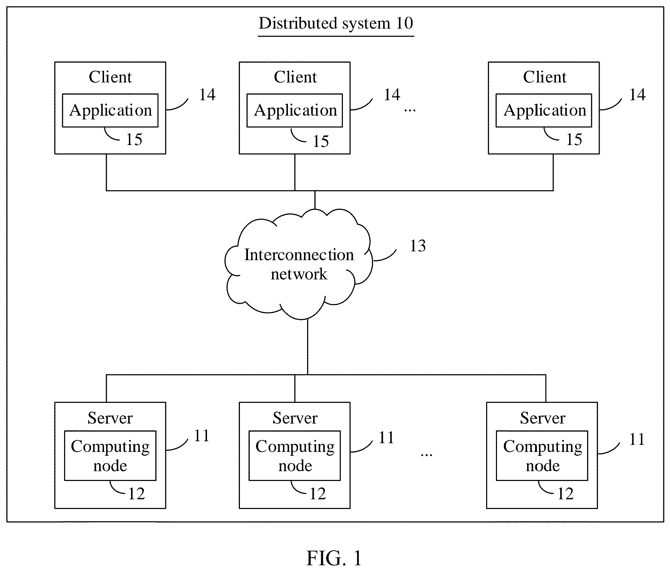

As shown in FIG. 1, a distributed system 10 includes multiple servers 11, multiple computing nodes 12, an interconnection network 13, multiple clients 14, and an application 15. One or more computing nodes 12 may be configured on each server 11. The computing node 12 may include but is not limited to a graphics processing unit, a field programmable gate array (field programmable gate array, FPGA), and the like. In addition to the computing node 12, the server 11 may further include one or more general-purpose processing units (not shown in FIG. 1) such as a central processing unit. One or more applications 15 may be run on each client 14, and the application 15 may perform a corresponding data processing or analysis task and other tasks. The multiple clients 14 may be coupled to one or more servers 11 through the interconnection network 13, and the application 15 is run by one or more computing nodes 12 on the server 11. The interconnection network 13 may support different types of wired or wireless connections based on various network transmission technologies such as remote direct memory access (remote direct memory access, RDMA) and a transmission control protocol (transmission control protocol, TCP).

The following describes the technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "multiple" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the description of embodiments, unless otherwise specified, "multiple" means two or more.

Currently, to implement computing result summarization, an implementation is to summarize computing results in a protocol stack/network communication manner. For example, if data summarization needs to be performed between a server node 1 and a server node 2, a computing process 1 of the server node 1 sends a computing result to a computing process 2 of the server node 2 according to a transmission control protocol or an internet protocol (internet protocol, IP). After the server node 2 receives the computing result of the computing process 1, the computing result of the computing process 1 is summarized with a computing result of the computing process 2.

However, in this manner, a computing task needs to sense an interconnection topology between server nodes. This is not conducive to extension and migration of the computing task. In addition, if data of the computing task is processed through a protocol stack, a large quantity of software layers are involved and performance is poor. For example, the server node 1 needs to copy the computing result to the protocol stack before sending the computing result, and then sends the computing result to the server node 2 through a network. When receiving the computing result, the server node 2 further needs to copy the computing result of the server node 1 to a memory of the server node 2. Therefore, in the entire data summarization process, two more copies of computing results are performed, resulting in poor performance and a complex processing procedure of an entire distributed network/computer cluster. In addition, to improve a computing capability of the server node, an acceleration chip is used to perform accelerated computing. For example, an artificial intelligence (artificial intelligence, AI) accelerator card or a graphics processing unit (graphics processing unit, GPU) card is added to the server node, to accelerate AI computing. In this case, a central processing unit (central processing unit, CPU) of the server node performs logic control, and does not participate in AI computing. However, the acceleration chip usually cannot directly connect to a TCP/IP protocol stack or perform remote direct memory access, and needs to be customized. This is not conducive to a chip design. Therefore, if the central processing unit and the acceleration chip are used for interactive processing, a procedure is more complex.

Another implementation is to use a supernode (supernode) method. A supernode includes multiple nodes interconnected through high-speed links, and the node includes a computing unit (for example, a CPU or an AI chip), a corresponding physical memory (for example, a high bandwidth memory (high bandwidth memory, HBM)), and the like. Physical memories of different nodes are uniformly addressed, a same operating system manages the multiple nodes that form the supernode, and the nodes access the uniformly addressed physical memories based on a shared page table. This method is essentially a non-uniform memory access (non-uniform memory access, NUMA) mechanism of an operating system.

However, physical addresses of memories that form the supernode need to be uniformly addressed, a quantity of chips that form the supernode is limited, and extensibility is limited. In addition, because the supernode is managed by one operating system, a same page table is used, a page table entry can be stored only in a physical memory of a node, and a page table entry of another node needs to be first accessed by another node in each time of memory access. Consequently, performance is poor. Cache (cache) consistency needs to be supported between different nodes. This brings challenges to the chip design and a bandwidth of the high-speed link.

Therefore, embodiments of this application provide an access method. In the access method, a shared virtual address (shared virtual address, SVA) space is allocated for a first server node and a second server node, so that the first server node and the second server node can securely and reliably access each other based on a shared virtual address. This resolves problems of poor extensibility and low performance of an existing implementation.

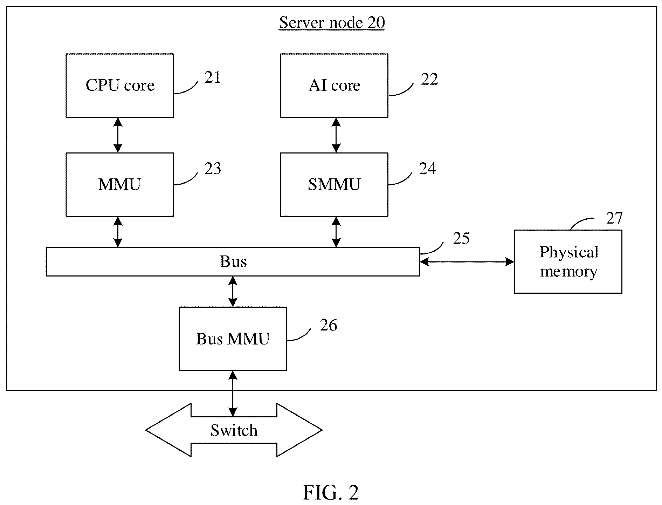

For ease of understanding, a server node to which an access method is applied is first described in embodiments of this application. FIG. 2 is a diagram of a structure of a server node according to an embodiment of this application. The server node 20 may include a central processing unit core 21 (CPU core), an artificial intelligence core 22 (AI core), a memory management unit 23 (memory management unit, MMU), a system memory management unit 24 (system memory management unit, SMMU), an address bus 25, a bus memory management unit 26 (bus memory management unit, bus MMU), and a physical memory 27 (physical memory). The central processing unit core 21 is responsible for logic computing. The artificial intelligence core 22 is responsible for matrix computing. The memory management unit 23 receives a virtual address translation request initiated by the central processing unit core 21, and searches a page table entry to translate a virtual address into a local physical address (local physical address, LPA) or a virtual physical address (virtual physical address, VPA). The system memory management unit 24 receives and processes the address translation request of the artificial intelligence core. The bus memory management unit 26 receives the address translation request of the address bus 25, forms an access request based on a result obtained through translation, and sends the access request to a switch of a high-speed link (high link). In addition, the bus memory management unit 26 also receives an access request from the switch of the high-speed link. The bus memory management unit 26 searches a local page table entry based on the access request of the high-speed link, to translate the virtual address into a physical address of the physical memory 27, and sends the access request to the address bus 25, to access the physical memory 27.

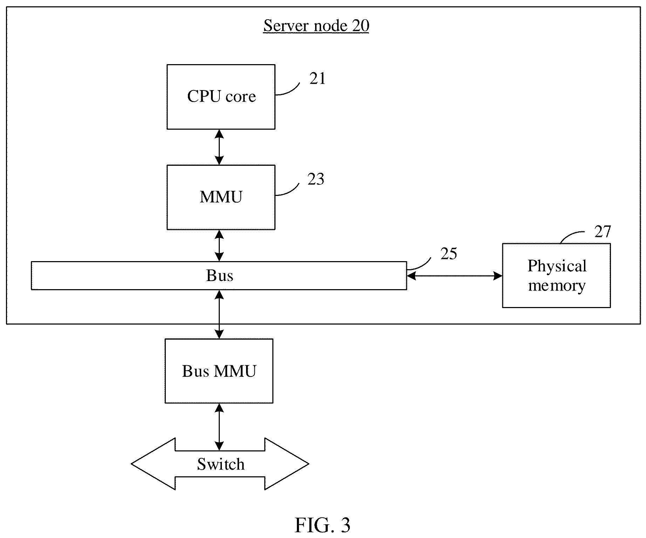

In another implementation, FIG. 3 is a diagram of a structure of another server node according to an embodiment of this application. The server node 20 may include the central processing unit core 21, the memory management unit 23, the address bus 25, and the physical memory 27. The bus memory management unit may not be integrated into the server node 20, is used as a new hardware unit, and is coupled to the address bus 25 in the server node 20.

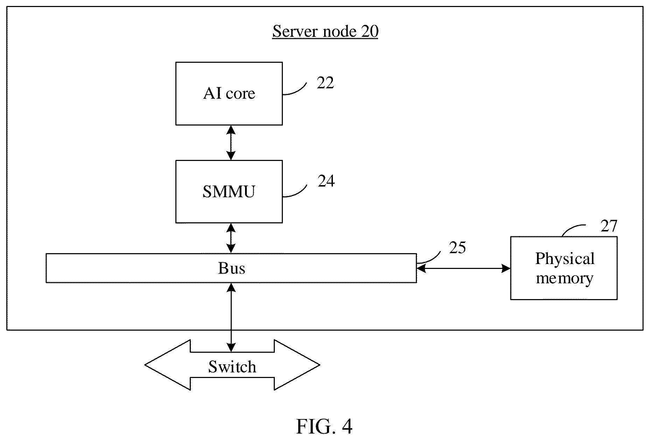

In still another implementation, FIG. 4 is a diagram of a structure of another server node according to an embodiment of this application. The server node 20 includes the artificial intelligence core 22, the system memory management unit 24, the address bus 25, and the physical memory 27. The bus memory management unit is integrated into the system memory management unit 24. The system memory management unit 24 has functions of receiving address access requests of the artificial intelligence core 22 and the high-speed link, performing address translation, and initiating address access. The address bus 25 identifies a to-be-accessed address, or accesses a local physical memory, or accesses a physical memory of a destination node through a high-speed link.

Compared with the server node shown in FIG. 3, in the server node shown in FIG. 4, one hardware unit is reduced. This reduces hardware costs and saves a hardware space. In an address translation process of the server node, the system memory management unit may search a page table entry only once to translate a virtual address into an access request of an external link. This reduces a quantity of page table entries, reduces system memory overheads, and improves performance.

However, the diagram of the structure of the server node provided in this embodiment of this application is not limited to the foregoing three implementations.

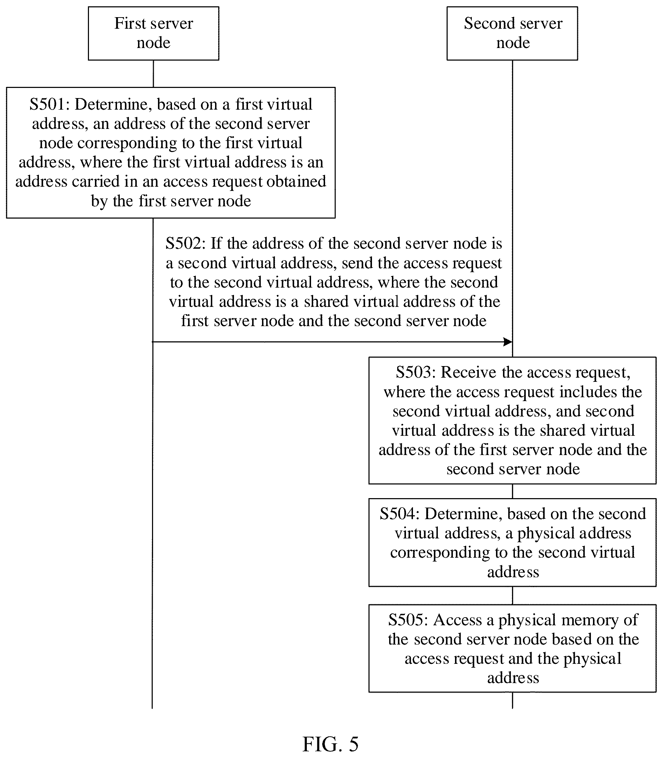

The server node in FIG. 2, FIG. 3, or FIG. 4 is used. The following describes the access method provided in embodiments of this application. FIG. 5 is a flowchart of an access method according to an embodiment of this application. A server node may be a request server node and a destination server node, or a server node may be only a request server node or a destination server node. A server node that initiates an access request may be understood as a request server node, and a server node that receives the access request may be understood as a destination server node. In this embodiment of this application, the request server node is a first server node, and the destination server node is a second server node. The method procedure is as follows.

S501: The first server node determines, based on a first virtual address, an address of the second server node corresponding to the first virtual address, where the first virtual address is an address carried in an access request obtained by the first server node.

S502: If the address of the second server node is a second virtual address, the first server node sends the access request to the second virtual address, where the second virtual address is a shared virtual address of the first server node and the second server node.

For example, when an application or a program delivers the access request to the first server node, the access request includes the first virtual address, and the first server node may obtain the address of the second server node based on the first virtual address. In this case, if the address of the second server node is the second virtual address, it indicates that the access request is not used to access the local server node, and the first server node may send the access request to the second server node corresponding to the second virtual address.

Correspondingly, S503: The second server node receives the access request, where the access request includes the second virtual address, and the second virtual address is the shared virtual address of the first server node and the second server node.

S504: The second server node determines, based on the second virtual address, a physical address corresponding to the second virtual address.

S505: The second server node accesses a physical memory of the second server node based on the access request and the physical address.

The second virtual address may be the shared virtual address. For ease of understanding, the shared virtual address is first described in this embodiment of this application. To implement simple, secure, and reliable shared data access of the server node, the server node may apply for a segment of virtual address space in a global virtual address space. The global virtual address space is a virtual address space that can be used by each server node in a distributed system or a computer cluster.

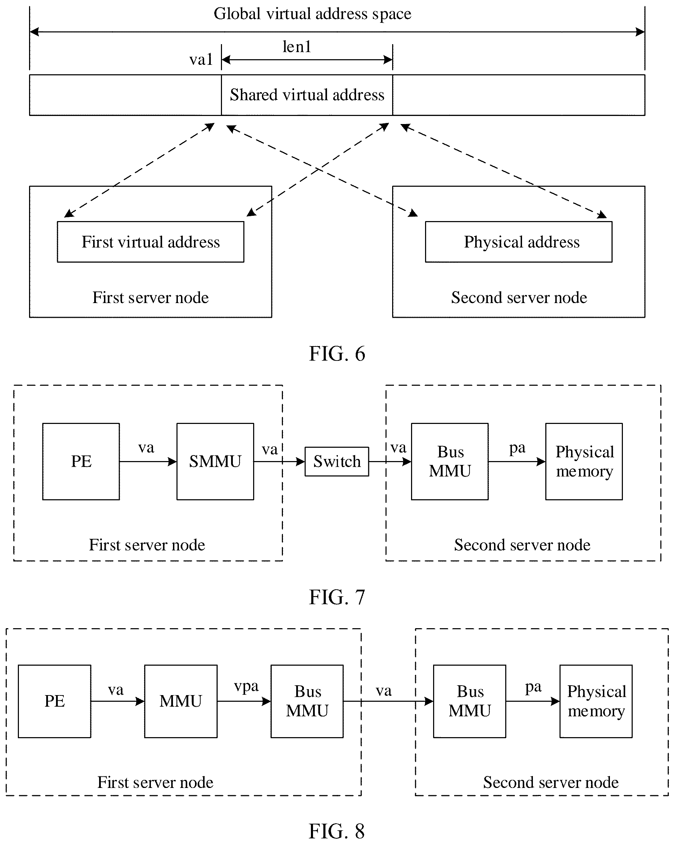

FIG. 6 is a diagram of an address mapping relationship according to an embodiment of this application. FIG. 6 shows the first server node and the second server node. The first server node and the second server node jointly apply for a segment of virtual address space in a global virtual address space, for example, a virtual address space with a start address va1 and a length len1. In the first server node, the shared virtual address is mapped to the first virtual address. In the second server node, the shared virtual address is mapped to the physical address.

The server node shown in FIG. 4 is used. A flowchart of initiating the access request for the shared virtual address by the first server node is shown in FIG. 7. A processing element (processing element, PE) on the first server node initiates the access request. The processing element may be a process, or may be an executable program. It is assumed that the first server node initiates the access request based on the shared virtual address (for example, va) of the first server node and the second server node. In other words, the first virtual address is an address in the shared virtual address. A system memory management unit of the first server node determines the second virtual address (represented by va in FIG. 7) based on the first virtual address and a correspondence between the first virtual address and the second virtual address, and then sends the access request to the second server node based on the second virtual address. In this case, the second virtual address may be the same as the first virtual address, or the second virtual address may be different from the first virtual address. After the second server node receives the access request, a bus memory management unit of the second server node processes the access request from a switch of an external link, where the access request includes the second virtual address. The bus memory management unit determines the physical address (represented by pa in FIG. 7) based on the second virtual address and a correspondence between the second virtual address and the physical address, and accesses the physical memory corresponding to the physical address.

The first server node may be coupled to the second server node through a transmission line, and the access request of the first service node may be directly sent to the second server node. In addition, the first server node may alternatively be coupled to the second server node through the switch. The first service node sends the access request to the switch, and then the switch forwards the access request to the second server node.

Optionally, step 501 may include: The first server node determines, based on the first virtual address, a virtual physical address corresponding to the first virtual address, where the virtual physical address is an address of a virtual space of the first server node. The first server node determines, based on the virtual physical address, the address of the second server node corresponding to the virtual physical address.

The first server node may be divided into a virtual space corresponding to the virtual physical address, where the virtual space may be far greater than a space of a local physical address. This can expand a physical memory space that can be accessed by the first server node.

The server node in FIG. 2 is used. A flowchart of initiating the access request for the shared virtual address of the second server node by the first server node is shown in FIG. 8. A processing element on the first server node initiates the access request. It is assumed that the first server node initiates the access request based on the shared virtual address (represented by va in FIG. 8) of the first server node and the second server node. In other words, the first virtual address is an address in the shared virtual address. A memory management unit of the first server node determines a virtual physical address (represented by vpa in FIG. 8) based on the first virtual address and a correspondence between the first virtual address and the virtual physical address. Then, a bus memory management unit of the first server node determines the address of the second server node based on the virtual physical address and a correspondence between the virtual physical address and the address of the second server node. In this case, the address of the second server node is the second virtual address (represented by va in FIG. 8). Then, the access request is sent to the second server node based on the second virtual address. A bus memory management unit of the second server node processes the access request from the first server node, where the access request includes the second virtual address. The bus memory management unit determines the physical address (represented by pa in FIG. 8) based on the second virtual address and a correspondence between the second virtual address and the physical address, and accesses the physical memory corresponding to the physical address.

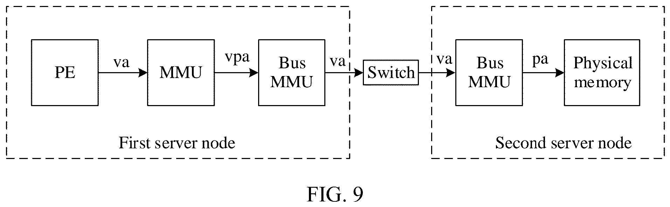

In another implementation, as shown in FIG. 9, the first server node may alternatively send the access request to a switch, and the access request is sent to the second server node through the switch. A manner of sending the access request is not limited in embodiments of this application.

The correspondence between the first virtual address and the virtual physical address is stored in a server node page table, and the correspondence between the virtual physical address and the address of the second server node is stored in a bus page table.

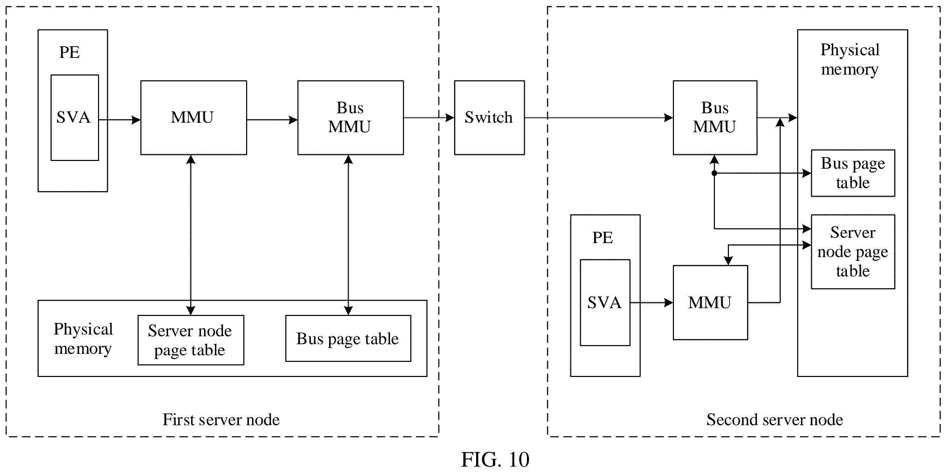

The server node page table and the bus page table may be stored in a physical memory of the second server node. As shown in FIG. 10, it is assumed that the first server node and the second server node perform shared access based on a same global virtual address. The second server node applies for the global virtual address, and locally establishes a correspondence between the shared virtual address and the local physical address, where the correspondence is stored in the bus page table. The first server node also establishes a correspondence between the shared virtual address and the virtual physical address, where the correspondence is stored in the server node page table. Then, the first server node establishes a correspondence between the virtual physical address and the first virtual address, where the correspondence is stored in the bus page table.

In this case, the processing element on the first server node initiates the access request for the shared virtual address, where the access request includes the first virtual address. The memory management unit first searches the server node page table to obtain the address of the second server node obtained by translating the first virtual address. If the address of the second server node is a physical address, access to the local physical memory is initiated through an internal bus. If the address of the second server node is a virtual physical address, the virtual physical address is sent to the bus memory management unit through an internal bus. The bus memory management unit searches the bus page table for the second virtual address corresponding to the virtual physical address, and sends the access request to the second server node based on the second virtual address. After receiving the access request, the second server node searches, via the bus memory management unit, the bus page table for the physical address corresponding to the second virtual address, and accesses the physical memory of the second server node based on the physical address.

A page table entry length of the server node page table is different from a page table entry length of the bus page table. The page table entry length may also be understood as a page table entry granularity. In an example, the page table entry length of the server node page table may be 4 KB, and the page table entry length of the bus page table may be 2 MB. Therefore, different quantities of server node page tables or bus page tables may be obtained by controlling the page table entry length.

It may be understood that the page table entry length of the server node page table may alternatively be the same as the page table entry length of the bus page table. A value of the page table entry length is not specifically limited in this application.

The access request further includes an access credential (token), and the access credential is used to configure an access permission of the access request.

The access credential is stored in the bus page table of the second server node, and an access permission for a virtual address is configured in the bus page table based on the access credential. If the first server node and the second server node use the shared virtual address, in the first server node, the correspondence between the shared virtual address and the virtual physical address needs to be established, the bus page table needs to be configured, then the correspondence between the virtual physical address and the first virtual address needs to be established, and the server node page table needs to be configured. A page table mapping entry further includes information about the access credential. After receiving the access request, the second server node searches the bus page table based on the access request.

Correspondingly, the second server node determines, based on the access credential, whether the access permission of the access request is valid.

In addition, a same segment of virtual address space may support multiple access credentials, and different access permissions are granted based on the access credentials. The access permissions may include a read-write permission, a read-only permission, a write-only permission, and the like. Optionally, the method may further include: if the address of the second server node is the physical address, accessing the physical memory of the first server node based on the physical address, where the first server node and the second server node are the same server node.

For example, if the address of the second server node determined based on the first virtual address is the physical address, it indicates that the access request is used to access the local server node. In this case, the server node is both the first server node and the second server node, and the physical memory corresponding to the physical address is accessed based on the access request.

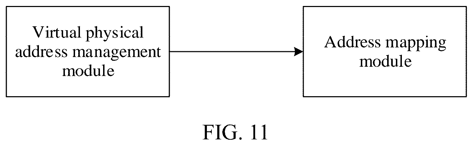

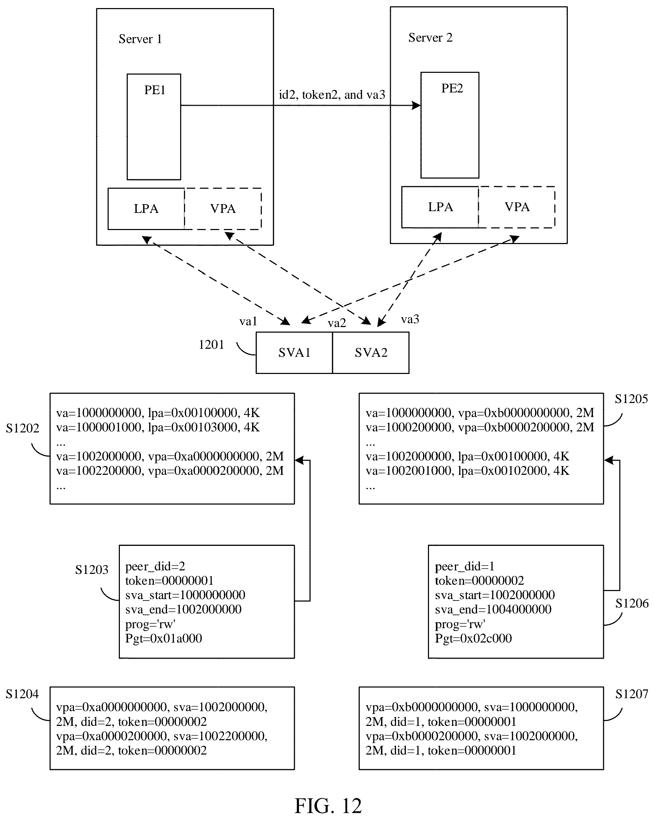

In conclusion, the following describes a procedure of configuring a page table of a server node. As shown in FIG. 11, a server node may include a virtual physical address management module and an address mapping module. The virtual physical address management module is configured to configure a virtual physical address space, and the address mapping module is configured to perform address mapping. An address mapping procedure may include a procedure shown in FIG. 12. FIG. 12 is a flowchart of a page table configuration of a server node according to an embodiment of this application. The flowchart is applied to the server node shown in FIG. 2 or FIG. 3. A first server node and a second server node configure an idle virtual address into a dynamic address window (dynamic address window, DAW) based on a size of a shared virtual address space and a server node that forms a distributed system or a computer cluster, then an access request for the virtual address is sent to a bus memory management unit through an address bus based on a range of the dynamic address window, and the bus memory management unit performs address translation.

In an implementation, it is assumed that only a server node 1 and a server node 2 share data, where a size of the shared data is 32 MB. In this case, the virtual physical address management module only needs to configure a 32 MB virtual physical address space into a dynamic address window. For example, a virtual physical address space of (0xa0000000000, 32 MB) is configured into a dynamic address window of the server node 1, and a virtual physical address space of (0xb0000000000, 32 MB) is configured into a dynamic address window of the server node 2.

A procedure of the address mapping module may include the following procedure. As shown in S1201, a process 1 is started on the server node 1 (a device identification (identification, id) is 1). The process 1 includes: create_process "pid=1, shareMemSize=32 MB, token=0x00000001, peer _did=2, peer _token=0x00000002, total_process=2". The parameter pid indicates a number of the process 1, shareMemSize indicates a size of a shared virtual address space in each process, token indicates an access credential for the server node 1 to share a memory, peer_did indicates a device identification of the server node 2, peer_token indicates a credential for accessing the server node 2, and total_process indicates a quantity of to-be-started processes. When the process 1 is started, a size of a required shared virtual address space computed based on a parameter is 64 MB. The shared virtual address space is applied for through an interface of an operating system. A start address of the shared virtual address space may be 0x1000000000, for example, mmap (Ox1000000000, 64 MB). Therefore, the virtual address space (val to va2) is obtained.

As shown in S1202, the process 1 invokes a memset (0x1000000000, 0, 32 MB) interface of the operating system, and the operating system establishes a server node page table for the first 32 MB space on the server node 1, where a page table entry size (pagesize) of the server node page table is 4 KB. In this case, 8k 4 KB page table entries are added. Each page table entry maps a 4 KB virtual address to a physical address of the server node 1. For example, there are 8k address mapping relationships such as (0x1000000000, 0x00100000) and (0x1000001000, Ox00103000). In an example, a local physical address corresponding to the virtual address va=1000000000 is lpa=0x00100000.

As shown in S1203, the process 1 invokes a set_shared (0x1000000000, 32 MB, token=0x00000001, peer_did=2, prog="rw") interface of the address mapping module. A 32 MB address space starting from 0x1000000000 of the server node 1 is configured, that is, a permission table is configured. The permission table may be shared with a server node with peer_did=2 for shared access. An access credential is a parameter value of token, and an access permission is read-write.

As shown in S1204, the process 1 invokes a map_remote (0x1000000000+32 MB, 32 MB, did=2, peer_token=0x00000002) interface of the address mapping module. A 32 MB space starting from the virtual address 0x1000000000+32 MB is configured for remote access. An access credential is a token value. The map_remote interface includes the following steps: (1) A virtual physical address space is applied for based on a size of a to-be-mapped space, for example, a 32 MB virtual physical address space starting from vpa=0xa000000000. (2) Page table mapping is configured in a bus page table, where a page table entry size is 2 MB, and 16 page table entries such as (0x1000000000+32 MB, 0xa000000000, 2 MB) and (0x1000000000+34 MB, 0xa000000000+2 MB, 2 MB) are separately mapped. (3) Page table mapping is configured in a server page table, to translate a virtual physical address into a virtual address, where a page table entry includes both a device identification and an access credential of a server node corresponding to the virtual address.

A process 2 is started on the server node 2 (a device identification is 2). The process 2 includes: create_process "pid=2, shareMemSize=32 MB, token=0x00000002, peer_did=1, peer_token=0x00000001, total_process=2". The parameter pid indicates a number of the process 2, shareMemSize indicates a size of a shared virtual address space in each process, token indicates an access credential for the server node 2 to share a memory, peer_did indicates a device identification of the server node 1, peer_token indicates a credential for accessing the server node 1, and total_process indicates a quantity of to-be-started processes. When the process 2 is started, a size of a required shared virtual address space computed based on a parameter is 64 MB. The shared virtual address space is applied for through an interface of an operating system. A start address of the shared virtual address space may be 0x1000000000, for example, mmap (0x1000000000, 64 MB). Therefore, the virtual address space (va2 to va3) is obtained.

As shown in S1205, the process 2 invokes a memset (0x1000000000+32 MB, 0, 32 MB) interface of the operating system, and the operating system establishes, on the server node 2, a page table entry for a 32 MB space starting from 0x1000000000+32 MB. If a page table entry size (pagesize) is 4 KB, 8k 4 KB page table entries are added. Each page table entry maps a 4 KB virtual address to a physical address of the server node 2. For example, there are 8k address mapping relationships such as (0x1000000000+32 MB, 0x00100000) and (0x1000001000+32 MB+4 KB, 0x00102000).

As shown in S1206, the process 2 invokes a set_shared (0x1000000000+32 MB, 32 MB, token=0x00000002, peer_did=1, prog="rw") interface of the address mapping module. A 32 MB address space starting from 0x1000000000+32 MB of the server node 2 is configured, and may be shared with a server node with peer_did=1 for shared access. An access credential is a parameter value of token, and an access permission is read-write.

As shown in S1207, the process 2 invokes a map_remote (0x1000000000, 32 MB, did=1, peer_token=0x00000001) interface of the address mapping module. A32 MB space starting from the virtual address Ox1000000000 is configured for remote access. An access credential is a peer_token value. The map_remote interface includes the following steps: (1) A virtual physical address space is applied for based on a size of a to-be-mapped space, for example, a 32 MB virtual physical address space starting from 0xb000000000. (2) Page table mapping is configured in the bus page table, where a page table entry size is 2 MB, and 16 page table entries such as (0x1000000000, 0xb000000000, 2 MB) and (0x1000000000+2 MB, 0xb000000000+2 MB, 2 MB) are separately mapped. (3) Page table mapping is configured in the server page table, to translate a virtual physical address into a virtual address, where a page table entry includes both a device identification and an access credential of a server node corresponding to the virtual address.

Therefore, the process 1 performs task computing, and writes a computing result into Ox1000000000. When the virtual address is accessed, a central processing unit translates the virtual address into a physical address via the memory management unit for access.

The process 2 performs task computing, and writes a computing result into 0x1000000000+32 MB. When the virtual address is accessed, the central processing unit translates the virtual address into a physical address via the memory management unit for access.

If the process 1 obtains the computing result from the process 2 for summarization, the address Ox1000000000+32 MB is accessed, and the central processing unit translates the address into a virtual physical address (0xa0000000000) via the memory management unit for access. If a bus of the server node on which the process 1 resides finds that 0xa0000000000 is in the local dynamic address window, the access request is forwarded to the bus memory management unit. In this case, in the access request, did=2, token=0x00000002, the virtual address is Ox1000000000+32 MB, and access is read-only access. The bus memory management unit forms the access request, and sends the access request to an external high-speed link.

The server node 2 receives the access request sent by the server node 1, and the bus memory management unit of the server node 2 searches the page table entry based on did, the token, and the virtual address. In an implementation, because the token is valid, the permission table is successfully searched, and the bus memory management unit further searches the page table entry of the server 2 based on the virtual address, to obtain the local physical address. In another implementation, the permission table and the page table entry may be concurrently searched. If each of two search results indicates that the search succeeds, the access request is valid. If one of the search results indicates that the search fails, the access request is invalid.

The server node 2 initiates a read request for the physical address 0x00100000, and returns read data to the server node 1 through the high-speed link. The read data is summarized and computed via processing code of the server node 1.

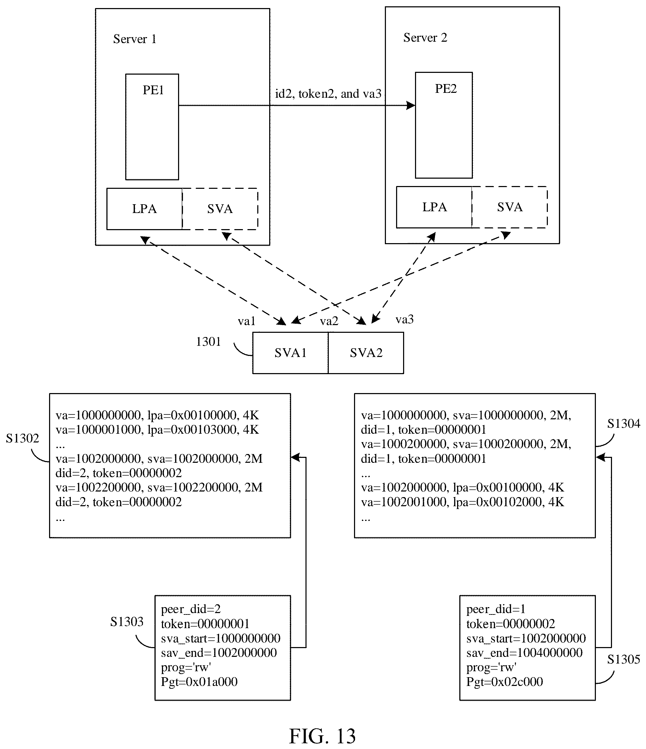

In another implementation, FIG. 13 is a flowchart of another page table configuration of the server node according to the embodiment of this application. The flowchart is applied to the server node shown in FIG. 4. Refer to the flowchart of the page table configuration shown in FIG. 11. In the flowchart, a server node page table and a bus page table do not need to be separately configured, and only a system page table needs to be configured. S1301 is the same as S1201, S1303 is the same as S1203, and S1304 is the same as S1206. Therefore, details are not described herein again. In addition, because virtual addresses of server nodes are different, the server node obtains the address of the second server node based on a translation indication of the system memory management unit. If the address of the second server node is the second virtual address, the access request is sent to the second server node. In this embodiment of this application, the first virtual address is the same as the shared virtual address. In another implementation, the first virtual address and the shared virtual address may alternatively be different.

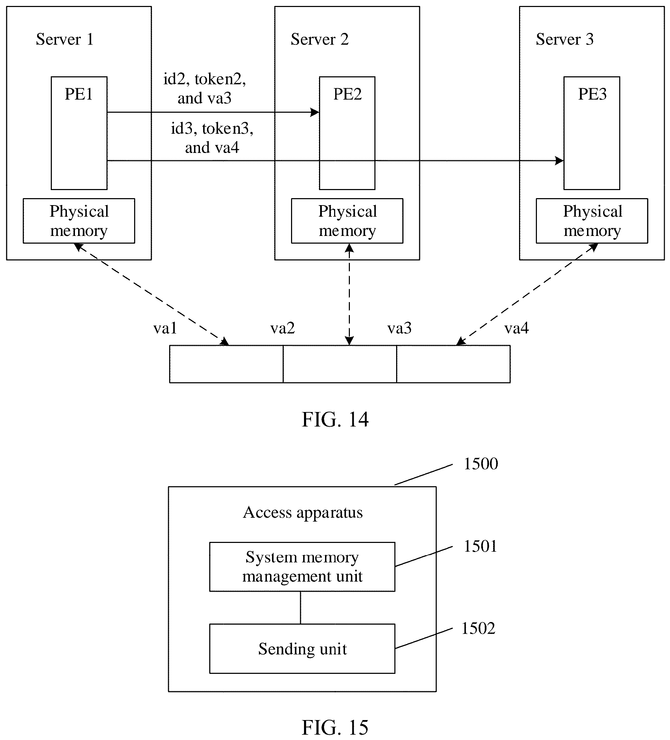

Therefore, in a scenario requiring a huge computation amount, for example, in the field of artificial intelligence and the field of high-performance computing (high performance computing, HPC), one computing task is usually decomposed into multiple computing subtasks, and then computing results are combined to perform a next round of iterative computing until a computing result meets a requirement. As shown in FIG. 14, it is assumed that a computing task is decomposed into three computing subtasks, and the three computing subtasks are respectively deployed on three servers: a server 1, a server 2, and a server 3. After the computing subtasks are completed, the server 1 stores a computing result in a virtual address space of va1 to va2, the server 2 stores a computing result in a virtual address space of va2 to va3, and the server 3 stores a computing result in a virtual address space of va3 to va4. If a server needs to summarize a computing result, the server initiates an address access request to obtain the computing result from another server. In an example, if the server 1 needs to obtain the computing result from the server 2, the server 1 initiates an address access request for a virtual address space (virtual address space of va2 to va3) of the server 2, to obtain data from the virtual address space of the server 2 to a physical memory of the server 2, where the address access request includes id2, token2, and va3. In another example, if the server 1 needs to obtain the computing result from the server 2, the server 1 initiates an address access request for a virtual address space (virtual address space of va3 to va4) of the server 2, obtain data from the virtual address space of the server 3 to a physical memory of the server 3, where the address access request includes id3, token3, and va4.

It may be understood that, to implement the foregoing functions, an electronic device includes a corresponding hardware and/or software module for performing each function. With reference to algorithm steps of each example described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples, for example, each functional module may be obtained through division based on each corresponding function, or two or more functions may be integrated into one processing module. The foregoing integrated module may be implemented in a form of hardware. It should be noted that division into the modules in embodiments is an example and is merely logical function division. In actual implementation, there may be another division manner.

When each functional module is obtained through division based on each corresponding function, FIG. 15 is a diagram of a possible composition of an access apparatus 1500 in the foregoing embodiments. As shown in FIG. 15, the access apparatus 1500 may include a system memory management unit 1501 and a sending unit 1502.

The system memory management unit 1501 may be configured to support the access apparatus 1500 in performing step S501 and the like, and/or is configured to perform another process in the technology described in this specification.

The sending unit 1502 may be configured to support the access apparatus 1500 in performing step S502 and the like, and/or is configured to perform another process in the technology described in this specification.

It should be noted that all related content of the steps in the foregoing method embodiment may be cited in function descriptions of corresponding functional modules. Details are not described herein again.

The access apparatus provided in this embodiment is configured to perform the foregoing access method, and therefore can achieve the same effect as the foregoing implementation method.

When an integrated unit is used, the access apparatus 1500 may include a processing module, a storage module, and a communication module. The processing module may be configured to control and manage an action of the access apparatus 1500, for example, may be configured to support the access apparatus 1500 in performing the steps performed by the system memory management unit 1501 and the sending unit 1502. The storage module may be configured to support the access apparatus 1500 in storing program code, data, and the like. The communication module may be configured to support the access apparatus 1500 in communicating with another device, for example, communicating with a wireless access device.

The processing module may be a processor or a controller. The processing module may implement or execute various example logical blocks, modules, and circuits described with reference to content disclosed in this application. The processor may be alternatively a combination for implementing a computing function, for example, a combination including one or more microprocessors and a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the access apparatus in this embodiment may be a server node having the structure shown in FIG. 4.

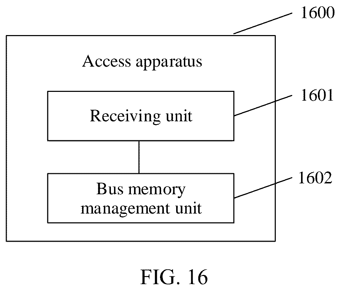

Correspondingly, when each functional module is obtained through division based on each corresponding function, FIG. 16 is a diagram of a possible composition of an access apparatus 1600 in the foregoing embodiments. As shown in FIG. 16, the access apparatus 1600 may include a receiving unit 1601 and a bus memory management unit 1602.

The receiving unit 1601 may be configured to support the access apparatus 1600 in performing step S503 and the like, and/or is configured to perform another process in the technology described in this specification.

The bus memory management unit 1602 may be configured to support the access apparatus 1600 in performing step S504, step S505, and the like, and/or is configured to perform another process in the technology described in this specification.

It should be noted that all related content of the steps in the foregoing method embodiment may be cited in function descriptions of corresponding functional modules. Details are not described herein again.

The access apparatus 1600 provided in this embodiment is configured to perform the foregoing access method, and therefore can achieve the same effect as the foregoing implementation method.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the access method in the foregoing embodiments.

An embodiment of this application further provides a chip system. The chip system includes a processor core, a system memory management unit, and a physical memory, the processor core is coupled to the system memory management unit, and the system memory management unit is coupled to the physical memory. The system memory management unit includes a memory management unit and a bus memory management unit, and the memory management unit is coupled to the bus memory management unit.

An embodiment of this application further provides a computer storage medium. The computer storage medium stores computer instructions. When the computer instructions are run on an electronic device, the electronic device is enabled to perform the foregoing related method steps, to implement the access method in the foregoing embodiments.

An embodiment of this application further provides a computer program product. When the computer program product runs on a computer, the computer is enabled to perform the foregoing related steps, to implement the access method performed by an electronic device in the foregoing embodiments.

In addition, an embodiment of this application further provides an apparatus. The apparatus may be specifically a chip, a component, or a module. The apparatus may include a processor and a memory connected to each other. The memory is configured to store computer-executable instructions. When the apparatus runs, the processor may execute the computer-executable instructions stored in the memory, so that the chip performs the access method performed by an electronic device in the foregoing method embodiment.

The electronic device, the computer storage medium, the computer program product, or the chip provided in embodiments is configured to perform the corresponding method provided above. Therefore, for beneficial effect that can be achieved by the electronic device, the computer storage medium, the computer program product, or the chip, refer to the beneficial effect in the corresponding method provided above. Details are not described herein again.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. There may be another division manner in actual implementation. For example, multiple units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electric form, a mechanical form, or another form.

The units described as separate parts may or may not be physically separate, and parts displayed as units may be one or more physical units, that is, may be located at one location, or may be distributed at different locations. Some or all of the units may be selected based on an actual requirement to achieve the objectives of the solutions of embodiments.

In addition, functional units in embodiments of this application may be integrated into one processing element, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An access method, wherein the method comprises:
determining, based on a first virtual address, an address of a second server node corresponding to the first virtual address, wherein the first virtual address is an address carried in an access request obtained by a first server node; and
if the address of the second server node is a second virtual address, sending the access request to the second virtual address, wherein the second virtual address is a shared virtual address of the first server node and the second server node.

2. The method according to claim 1, wherein the determining, based on the first virtual address, the address of the second server node corresponding to the first virtual address comprises:
determining, based on the first virtual address, a virtual physical address corresponding to the first virtual address, wherein the virtual physical address is an address of a virtual space of the first server node; and
determining, based on the virtual physical address, the address of the second server node corresponding to the virtual physical address.

3. The method according to claim 2, wherein a correspondence between the first virtual address and the virtual physical address is stored in a server node page table, and a correspondence between the virtual physical address and the address of the second server node is stored in a bus page table.

4. The method according to claim 3, wherein a page table entry length of the server node page table is different from a page table entry length of the bus page table.

5. The method according to any one of claims 1 to 4, wherein the access request further comprises an access credential and an identification of the second server node, and the access credential is used to configure an access permission of the access request.

6. The method according to claim 1, wherein the method further comprises:
if the address of the second server node is a physical address, accessing a physical memory of the first server node based on the physical address, wherein the first server node and the second server node are the same server node.

7. An access method, wherein the method comprises:
receiving an access request comprising a second virtual address, wherein the second virtual address is a shared virtual address of a first server node and a second server node;
determining, based on the second virtual address, a physical address corresponding to the second virtual address; and
accessing a physical memory of the second server node based on the access request and the physical address.

8. The method according to claim 7, wherein the access request further comprises an access credential, and the access credential is used to configure an access permission of the access request; and before the determining, based on the second virtual address, the physical address corresponding to the second virtual address, the method further comprises:
determining, based on the access credential, whether the access permission of the access request is valid.

9. An access apparatus, wherein the access apparatus comprises a system memory management unit and a sending unit, wherein
the system memory management unit is configured to determine, based on a first virtual address, an address of a second server node corresponding to the first virtual address, wherein the first virtual address is an address carried in an access request obtained by a first server node; and
the sending unit is configured to: if the address of the second server node is a second virtual address, send the access request to the second virtual address, wherein the second virtual address is a shared virtual address of the first server node and the second server node.

10. The access apparatus according to claim 9, wherein the system memory management unit comprises a memory management unit and a bus memory management unit, wherein
the memory management unit is configured to determine, based on the first virtual address, a virtual physical address corresponding to the first virtual address, wherein the virtual physical address is an address of a virtual space of the first server node; and
the bus memory management unit is configured to determine, based on the virtual physical address, the address of the second server node corresponding to the virtual physical address.

11. The access apparatus according to claim 10, wherein a correspondence between the first virtual address and the virtual physical address is stored in a server node page table, and a correspondence between the virtual physical address and the address of the second server node is stored in a bus page table.

12. The access apparatus according to claim 11, wherein a page table entry length of the server node page table is different from a page table entry length of the bus page table.

13. The access apparatus according to any one of claims 9 to 12, wherein the access request further comprises an access credential and an identification of the second server node, and the access credential is used to configure an access permission of the access request.

14. The access apparatus according to claim 9, wherein the access apparatus further comprises an access unit, wherein
the access unit is configured to: if the address of the second server node is a physical address, access a physical memory of the first server node based on the physical address, wherein the first server node and the second server node are the same server node.

15. An access apparatus, wherein the access apparatus comprises a receiving unit and a bus memory management unit, wherein
the receiving unit is configured to receive an access request comprising a second virtual address, wherein the second virtual address is a shared virtual address of a first server node and a second server node;
the bus memory management unit is configured to determine, based on the second virtual address, a physical address corresponding to the second virtual address; and
the bus memory management unit is further configured to access a physical memory of the second server node based on the access request and the physical address.

16. The access apparatus according to claim 15, wherein the access request further comprises an access credential, and the access credential is used to configure an access permission of the access request; and the bus memory management unit is further configured to:
determine, based on the access credential, whether the access permission of the access request is valid.

17. A chip system, wherein the chip system comprises a processor core, a system memory management unit, and a physical memory, the processor core is coupled to the system memory management unit, and the system memory management unit is coupled to the physical memory.

18. The chip system according to claim 17, wherein the system memory management unit comprises a memory management unit and a bus memory management unit, and the memory management unit is coupled to the bus memory management unit.

19. A computer-readable storage medium, comprising computer instructions, wherein when the computer instructions are run on an electronic device, the electronic device is enabled to perform the method according to any one of claims 1 to 6 or the method according to claim 7 or 8.

20. A computer program product, wherein when the computer program product runs on a computer or a processor, the computer or the processor is enabled to perform the method according to any one of claims 1 to 6 or the method according to claim 7 or 8.
